# EUROPEAN PATENT SPECIFICATION

(11) **EP 3 621 265 B1**
(45) Date of publication and mention of the grant of the patent: **27.04.2022**
(21) Application number: 18192428.3
(22) Date of filing: 04.09.2018
(51) Int. Cl.: H04L 29/06

(54) **METHOD AND APPARATUS FOR DETECTING AND MITIGATING INFORMATION SECURITY THREATS IN THE INTERNET**
VERFAHREN UND VORRICHTUNG ZUM ERKENNEN UND VERMINDERN VON SICHERHEITSBEDROHUNGEN IM INTERNET
PROCÉDÉ ET APPAREIL DE DÉTECTION ET D'ATTÉNUATION DES MENACES À LA SÉCURITÉ D'INFORMATIONS SUR INTERNET

(43) Date of publication of application: 11.03.2020
(73) Proprietor: Nokia Technologies Oy, 02610 Espoo (FI)
(72) Inventor: Kalliola, Aapo, 00710 Helsinki (FI); Miche, Yoan, 01800 Klaukkala (FI); Holtmanns, Silke, 01800 Klaukkala (FI)
(74) Representative: Espatent Oy

(56) References cited:
- US-A1- 2018 139 236
- XINWEN FU ET AL: "On Recognizing Virtual Honeypots and Countermeasures", DEPENDABLE, AUTONOMIC AND SECURE COMPUTING, 2ND IEEE INTERNATIONAL SYM POSIUM ON, IEEE, PI, 1 September 2006 (2006-09-01), pages 211-218, XP031036842, ISBN: 978-0-7695-2539-6
- Xinwen Fu ET AL: "Camouflaging Virtual Honeypots", , 3 July 2005 (2005-07-03), XP055515922, Retrieved from the Internet: URL:https://pdfs.semanticscholar.org/68e2/ 28dd4a0d434d7f5c5bc10c77cfe9ccc990c6.pdf [retrieved on 2018-10-16]
- MUKKAMALA S ET AL: "Detection of Virtual Environments and Low Interaction Honeypots", INFORMATION ASSURANCE AND SECURITY WORKSHOP, 2007. IAW '07. IEEE SMC, IEEE, PI, 1 June 2007 (2007-06-01), pages 92-98, XP031113765, ISBN: 978-1-4244-1303-4

## Description

### TECHNICAL FIELD

Various example embodiments relate to detecting and mitigating information security threats in the Internet.

### BACKGROUND

This section illustrates useful background information without admission of any technique described herein representative of the state of the art.

Internet has vastly improved sharing of all kinds of information. Unfortunately, the Internet has also been abused to harness thousands of Internet enabled devices to perform botnet attacks against targeted Internet entities, such as servers of different organizations and governmental bodies.

Botnet attacks and many other Internet security threats employ various vulnerabilities of Internet connected devices. Often, the attackers communicate with numerous Internet devices so that the vulnerable devices can be detected and contaminated with computer worms or viruses. In order to detect such malicious operations, particularly configured Internet devices, honeypots, are provided to attract probing and contaminating traffic. The abuse often takes place through Internet devices of others: once an Internet device is taken into control, it is made to further spread malicious code to another Internet device. This enables efficient distribution of more or less serious malware such as ransomware, computer worms and viruses, and botnet slaving code.

As in warfare, measures create countermeasures also in the Internet security. Many honeypots attempt to detect malicious Internet traffic to expose its origin or at least help mitigating the effects of the attacks before or after they start (e.g., by denying Internet access from botnet devices). At the same time, attackers attempt to identify honeypots by searching distinct characteristics of honeypots from their data traffic. Such characteristics may include, for example, an unusual response to an intentionally erroneous data packets, particular drifting of a clock of the server, an unusual responding under increased load, and an unusual latency in responses to network messages (such as SYN/ACK). Such SYN/ACK analyzing is disclosed by each of XINWEN FU ET AL: "On Recognizing Virtual Honeypots and Countermeasures", Xinvven Fu ET AL: "Camouflaging Virtual Honeypots", and MUKKAMALA S ET AL: "Detection of Virtual Environments and Low Interaction Honeypots"

### SUMMARY

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first example aspect of the present invention, there is provided a method in a probe as defined by appended claim 1.

The reference values may be indicative of an Internet device other than a honeypot. Alternatively, the reference values may be indicative of a honeypot.

The probe may be a device configured to examine Internet devices for identifying likely honeypots. The probe may be an Internet connected computer. The probe may be a server computer.

The comparing of the latencies of the application layer response message and of the one or more lower layer continuation messages may comprise additionally comparing against each other at least two of the latencies of the application layer response message and the lower layer continuation messages.

The comparing of the latencies of the application layer response message and of the one or more lower layer continuation messages may comprise:
clustering N-dimensional latency data obtained from the application layer response message and the lower layer continuation messages; and
selecting best matches for the first Internet device from pre-probed Internet devices and honeypot clusters.

The clustering may employ classical clustering techniques, such as K-Means.

The application layer request message may comprise an HTTP request. The HTTP request may be any of: an HTTP GET; an HTTP HEAD request; an HTTP POST request; an HTTP PUT request; an HTTP DELETE request; an HTTP CONNECT request; an HTTP TRACE request. The application layer request message may be configured to cause issuing the application layer response message. The application layer response message may be a client error message, such as a bad request (e.g., HTTP 400), not found (e.g., HTTP 404), URI too large (HTTP 414), unsupported media type (e.g., HTTP 415). The application layer request message may be configured to cause the error message with greater than 99 % likelihood (e.g., by using an HTTP GET directed to a resource named sufficiently unusually).

The application layer request message may comprise a telnet request. The application layer request message may comprise a Secure Shell (SSH) request. The application layer request message may comprise a File Transfer Protocol (FTP) request. The application layer request message may comprise a Technical Report 069 (TR-069) request. The application layer request message may comprise a Structured Query Language (SQL) request.

Some or all of the one or more lower layer messages may precede the application layer request message. Some or all of the one or more lower layer messages may follow the application layer response message. Some or all of the one or more lower layer messages may be sent between the application layer request and response messages.

The one or more lower layer continuation messages may comprise or be transport layer messages. The lower layer continuation messages may comprise a transport layer connection set up response message. The one or more lower layer continuation messages may comprise a transport control protocol synchronization message, such as TCP SYN. The lower layer continuation messages may comprise a synchronization acknowledgment message, such as TCP SYN ACK message.

The lower layer continuation messages may comprise a transport layer connection tear down request message, such as a TCP FIN message or a three-way tear down conclusion acknowledgement message, such as a TCP FINACK-ACK message. In case of a tear down request message, the latency may be measured as a duration of time from the sending of the transport layer response to the sending of the tear down request message. In case of the conclusion acknowledgement message, the latency may be measured from sending of a TCP tear down acknowledgement to receiving of the tear down conclusion acknowledgement message. The continuation messages may continue flow control after a transport flow setup request message has been transmitted. For example, the term continuation message may cover messages relating to the setting up and continuing connection control, such as the TCP SYN ACK, TCP FIN and/or TCP FINACK-ACK messages.

The application layer response message may be a response to the application layer request. The application layer request message may be transmitted on top of the transport control protocol. The transport control protocol may be run on top of the Internet protocol.

The method of the first example aspect may be repeated N times for sending N times an application layer request message and lower layer continuation messages. The method may further comprise determining distributions of latencies of corresponding N application layer response messages and sets of one or more lower layer continuation messages. The method may further comprise comparing the determined distributions of latencies with respective reference latency distribution values. Honeypots may be detected from abnormal determined distributions of latencies in comparison to the respective reference latency distribution values.

Out of the N times an application layer request message is sent, I times the application layer request message may be a first application layer request message and K times the application layer request message may be a second application layer request message that is different than the first application layer request message, wherein I+K is less or equal to N. The determining of the distributions of latencies may be performed by analyzing latencies relating to the first application layer request message separately from the latencies relating to the second application layer request message. The first and second application layer request messages may be sent during non-overlapping periods of time. Alternatively, the first and second application layer request messages may be sent during overlapping periods of time.

According to a second example aspect of the present invention, there is provided a method as defined by appended claim 9.

The first Internet device may be an arbitrary Internet device that is or may be examined by probe. The first Internet device may be a honeypot. The honeypot may be configured to detect malicious Internet devices.

The method may further comprise receiving from the probe one or more subsequent application layer and lower layer request messages addressed to the first Internet device.

The method may further comprise, each time a subsequent application layer and lower layer request messages are received, determining a corresponding subsequent application layer response message and one or more subsequent lower layer continuation messages.

The method may further comprise determining emulated distributions of latencies for the subsequent response and continuation messages. The simulated distributions of latencies may be based on a latency profile of an Internet device other than the honeypot. The latency profile model may be configured to simulate normal Internet device behavior.

The method may further comprise sending to the probe, responsive to each of the one or more subsequent request message, the corresponding subsequent application layer response message and one or more lower layer continuation messages with the determined distribution of latencies for countering honeypot detection.

The method may further comprise receiving from the probe a plurality of different application layer requests and obtaining from the first Internet device associated lower layer requests. The different application layer requests may be responded with application layer responses and further lower layer continuation messages adapted to mimic corresponding latency profiles of an Internet device that is not a honeypot.

According to a third example aspect of the present invention, there is provided a first apparatus comprising:
a communication circuitry configured to send to a first Internet device an application layer request message and a lower layer request message associated with the application layer request message, and to responsively receive from the first Internet device an application layer response message and one or more lower layer continuation messages; and
a processing circuitry configured to perform the method of the first example aspect.

According to a fourth example aspect of the present invention, there is provided a second apparatus comprising:
a communication circuitry configured to receive network traffic originating from a probe for a honeypot; and
a processing circuitry configured to perform the method of the second example aspect.

The first Internet device may be a device designated to operate as a honeypot. Alternatively, the first Internet device may be a multipurpose device configured to perform further services or functions aside of operating as a honeypot.

The requests may comprise datagrams. The responses may comprise datagrams. The requests may comprise Transport Control Protocol (TCP) datagrams. The responses may comprise Transport Control Protocol (TCP) datagrams. The requests may comprise Stream Control Transmission Protocol (SCTP) datagrams. The responses may comprise Stream Control Transmission Protocol (SCTP) datagrams. The requests may comprise Real-Time Transport Protocol (RTP) Control Protocol (RTCP) datagrams. The responses may comprise Real-Time Transport Protocol (RTP) Control Protocol (RTCP) datagrams. The requests may comprise Session Description Protocol (SDP) datagrams. The responses may comprise Session Description Protocol (SDP) datagrams. The requests may comprise User Data Protocol (UDP) datagrams. The responses may comprise User Data Protocol (UDP) datagrams.

According to a fifth example aspect of the present invention, there is provided a computer program comprising computer executable program code configured to execute any method of the first or second example aspect.

The computer program may be stored in a computer readable memory medium. The computer readable memory medium may comprise a digital data storage such as a data disc or diskette, optical storage, magnetic storage, holographic storage, opto-magnetic storage, phase-change memory, resistive random access memory, magnetic random access memory, solid-electrolyte memory, ferroelectric random access memory, organic memory or polymer memory. The memory medium may be formed into a device without other substantial functions than storing memory or it may be formed as part of a device with other functions, including but not limited to a memory of a computer, a chip set, and a sub assembly of an electronic device.

Different non-binding example aspects and embodiments of the present invention have been illustrated in the foregoing. The embodiments in the foregoing are used merely to explain selected aspects or steps that may be utilized in implementations of the present invention. Some embodiments may be presented only with reference to certain example aspects of the invention. It should be appreciated that corresponding embodiments may apply to other example aspects as well.

### BRIEF DESCRIPTION OF THE DRAWINGS

For a more complete understanding of example embodiments of the present invention, reference is now made to the following descriptions taken in connection with the accompanying drawings in which:
Fig. 1 shows an architectural drawing of a system of an example embodiment;
Fig. 2 shows an extract of a log file of an example embodiment, representing a situation in which the delay mechanism is not operable or not present;
Fig. 3 shows a schematic drawing illustrating some messages of an example embodiment;
Fig. 4 shows a latency profile of a honeypot;
Fig. 5 shows a latency profile of an Internet device that is not a honeypot;
Fig. 6 shows a flow chart of a process in a probe according to an example embodiment;
Fig. 7 shows a flow chart of a defense process according to an example embodiment;
Fig. 8 shows a flow chart of another defense process according to an example embodiment;
Fig. 9 shows a flow chart of a yet another defense process according to an example embodiment;
Fig. 10 shows a block diagram of an apparatus of an example embodiment; and
Fig. 11 shows a flow chart of a delay mechanism management process of an example embodiment.

### DETAILED DESCRIPTON OF THE DRAWINGS

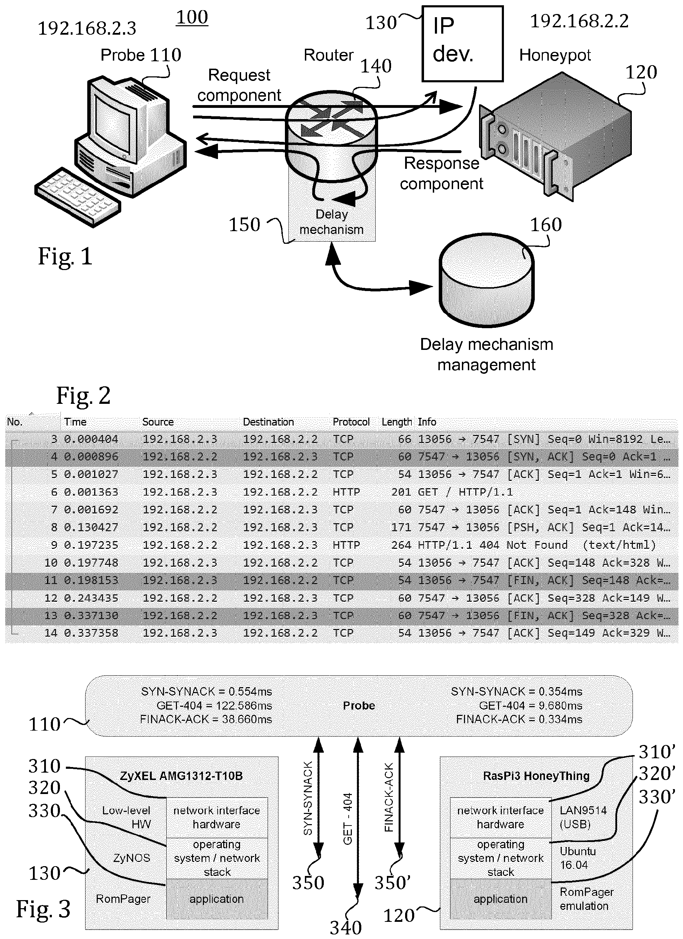

An example embodiment of the present invention and its potential advantages are understood by referring to Figs. 1 through 11 of the drawings. In this document, like reference signs denote like parts or steps.

Fig. 1 shows an architectural drawing of a system 100 of an example embodiment. Fig. 1 shows a probe 110, two Internet devices, i.e. an ordinary internet device 130 and a honeypot 120, as well as a router 140, a delay mechanism 150 and a delay mechanism management unit 160. The delay mechanism 150 is configured to latencies or timing of various messages sent by the honeypot 120 (and other honeypots as well, in an embodiment) based on reference values stored in the delay mechanism unit 160. The operation of the system 100 will be explained with more detail making use of further drawings. In an example embodiment, the probe 110 is an Internet connected computer, for example, a server computer. The probe 110 may be any device configured to examine Internet devices for identifying likely honeypots.

Fig. 2 shows an extract of a log file of an example embodiment, representing a situation in which the delay mechanism 150 is not operable or not present.

Fig. 3 shows a schematic drawing illustrating some messages of an example embodiment. In Fig. 3, an application layer request 340, here an HTTP GET message is sent by the probe 110 to the ordinary Internet device 130 and to the honeypot 120. In order to send the application layer request, an Internet Protocol packet flow is formed and controlled by the Transport Control Protocol (TCP). To this end, a first lower layer (transport layer) request 350 (outwards) is sent, here a TCP synchronization request message TCP SYN from the probe to the probed device. In Fig. 3, the a TCP SYN ACK message is sent back to the probe with a 0.554 ms latency and the application layer request message and response pair 340 (HTTP GET and HTTP 404 messages) are sent and received with a latency of 122.586 ms.

After the application layer request response message pair 340 has been exchanged between the probe 110 and the ordinary Internet device 130, the flow control continues by closing the lower layer connection i.e. the TCP port is closed. To this end, the probe 110 sends at some point a termination message (e.g., TCP FIN) and receives a responsive termination acknowledgement (e.g., TCP FIN), or the remote end may send the termination message to the probe 110 so that the probe responds by the termination acknowledgement and in case of three-way termination, the probe 110 further receives a conclusion acknowledgement (TCP FINACK-ACK) as a new lower layer continuation message, see lower layer message pair 350'. In case of the ordinary internet device 130, the latency of this second lower layer continuation message is 38.660 ms.

The respective latencies for the honeypot 120 are shown in Fig. 3 as 0.354 ms, 9.680 ms and 0.334 ms, i.e. these latencies are up to two orders of magnitude smaller.

In some cases, the lower-level TCP connection forming / tear-down actions are be performed with somewhat common parts of the network/software stack between real systems and honeypots, the application level responses are coming from very different code bases and thus reveal the largest discrepancies in latency (122.586 ms vs 9.680 ms. Also, the low-level features may provide identifiable information, see, e.g., the conclusion termination acknowledgement latency: 38.660 ms vs 0.334 ms.

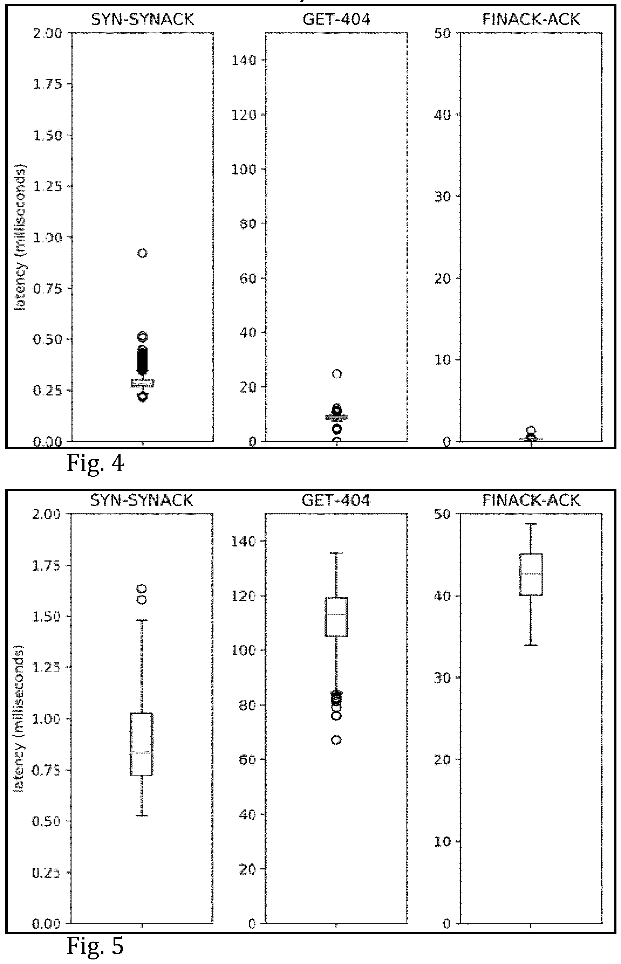

Figs. 4 and 5 illustrate latency profiles of the honeypot 120 and the ordinary Internet device 130. The delay mechanism 150 of Fig. 1 is configured to delay and forward packets between the honeypot and the probe in such a fashion that the resulting response delay profile observed by the probe is a close match to the emulated service. In an example embodiment, this takes into account the delay caused by the delay mechanism 150 and making a request to the delay mechanism management database 160 (although in an example embodiment, some common values are cached so the database query may not be necessary, but the query time may yet be compensated for).

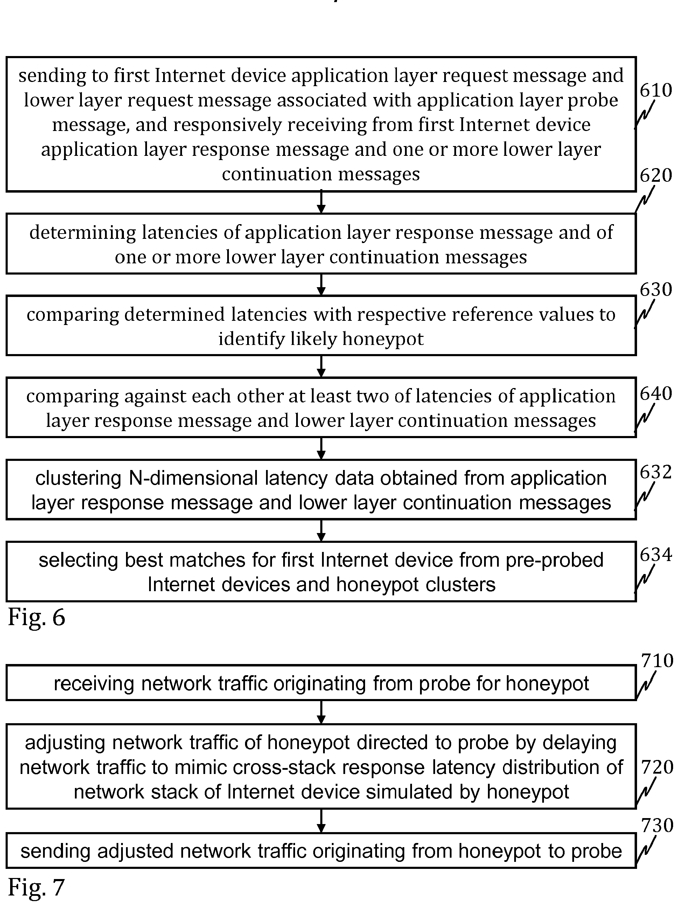

Fig. 6 shows a flow chart of a process in a probe according to an example embodiment. The process comprises sending 610 to a first Internet device an application layer request message and a lower layer request message associated with the application layer request message, and responsively receiving from the first Internet device an application layer response message and one or more lower layer continuation messages. In an example embodiment, the first Internet device is the honeypot 130. In an example embodiment, the honeypot 130 is configured to detect malicious Internet devices.

The process further comprises determining 620 latencies of the application layer response message and of the one or more lower layer continuation messages; and comparing 630 the determined latencies with respective reference values to identify a likely honeypot.

In an example embodiment, the reference values are indicative of an Internet device other than a honeypot. In another example embodiment, the reference values are indicative of a honeypot 120.

In an example embodiment, the comparing of the latencies of the application layer response message and of the one or more lower layer continuation messages comprises additionally comparing 640 against each other at least two of the latencies of the application layer response message and the lower layer continuation messages.

In an example embodiment, the comparing of the latencies of the application layer response message and of the one or more lower layer continuation messages comprises:
clustering 632 N-dimensional latency data obtained from the application layer response message and the lower layer continuation messages; and
selecting 634 best matches for the first Internet device from pre-probed Internet devices and honeypot clusters.

In detection of honeypots for malicious use, it may be more desirable to avoid honeypots than maximize the number of targets to be exposed to malicious campaigns. Hence, the selecting 634 of the best matches may be weighed to rather reject suspicious devices as potential honeypots than maximize number of devices that could be targeted in malicious campaigns. In result, the importance of efficiently concealing honeypots may be accented in order not to repel attackers from honeypots.

The clustering employs classical clustering techniques, such as K-Means.

In exchanging the lower layer messages, one or all of the one or more lower layer messages precedes the application layer request message in one example embodiment. In an example embodiment, some or all of the one or more lower layer messages follow the application layer response message. In an example embodiment, some or all of the one or more lower layer messages are sent between the application layer request and response messages.

In an example embodiment, the preceding steps are repeated N times for sending N times an application layer request message and lower layer continuation messages. In an example embodiment, the method further comprises determining distributions of latencies of corresponding N application layer response messages and sets of one or more lower layer continuation messages. In an example embodiment, the method further comprises comparing the determined distributions of latencies with respective reference latency distribution values. In an example embodiment, honeypots are detected from abnormal determined distributions of latencies in comparison to the respective reference latency distribution values. In another example embodiment, the reference latency distribution values correspond to those of honeypots and matching distributions of latencies indicates a honeypot whereas abnormal distributions indicate ordinary internet devices.

In an example embodiment, out of the N times an application layer request message is sent, I times the application layer request message is a first application layer request message and K times the application layer request message is a second application layer request message that is different than the first application layer request message, wherein I+K is less or equal to N. In an example embodiment, the determining of the distributions of latencies is performed by analyzing latencies relating to the first application layer request message separately from the latencies relating to the second application layer request message. In an example embodiment, the first and second application layer request messages are sent during non-overlapping periods of time. In an example embodiment, the first and second application layer request messages are sent during overlapping periods of time.

Fig. 7 shows a flow chart of a defense process according to an example embodiment, comprising:
710 receiving network traffic originating from a probe for a honeypot;
720 adjusting network traffic of the honeypot directed to the probe by delaying the network traffic to mimic a cross-stack response latency distribution of a network stack of an Internet device simulated by the honeypot; and
730 sending the adjusted network traffic originating from the honeypot to the probe.

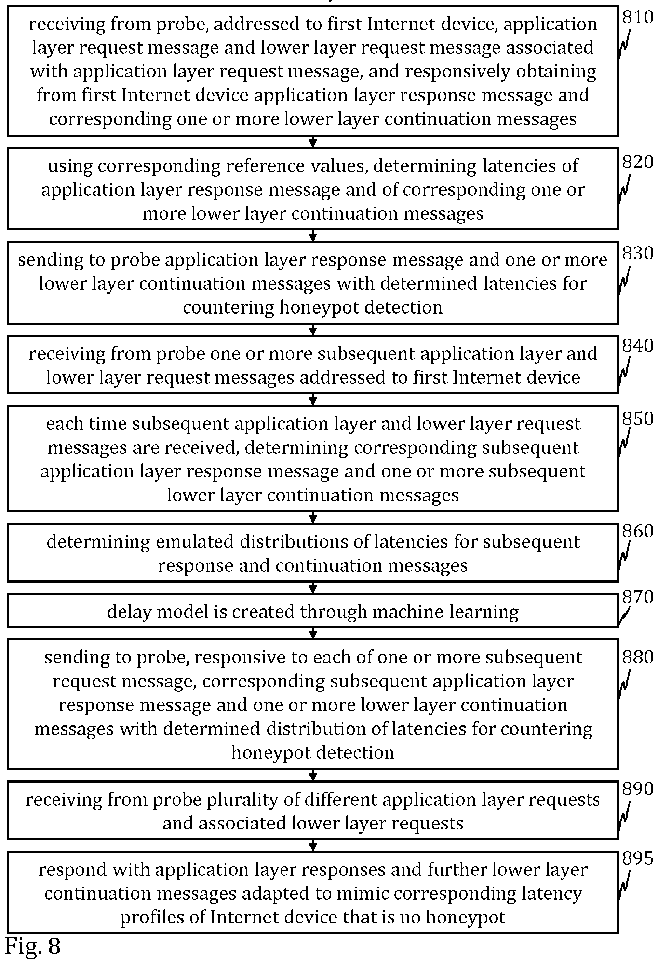

Fig. 8 shows a flow chart of another defense process according to an example embodiment, comprising:
receiving 810 from a probe, addressed to a first Internet device, an application layer request message and a lower layer request message associated with the application layer request message, and responsively obtaining from the first Internet device an application layer response message and corresponding one or more lower layer continuation messages;
using corresponding reference values, determining 820 latencies of the application layer response message and of the corresponding one or more lower layer continuation messages; and
sending 830 to the probe the application layer response message and the one or more lower layer continuation messages with the determined latencies for countering honeypot detection.

In an example embodiment, the method further comprises receiving 840 from the probe one or more subsequent application layer and lower layer request messages addressed to the first Internet device.

In an example embodiment, the method further comprises, each time a subsequent application layer and lower layer request messages are received, determining 850 a corresponding subsequent application layer response message and one or more subsequent lower layer continuation messages.

In an example embodiment, the method further comprises determining 860 emulated distributions of latencies for the subsequent response and continuation messages. The simulated distributions of latencies are based on a latency profile of an Internet device other than the honeypot. The latency profile model or delay model is configured to simulate normal Internet device behavior.

In an example embodiment, the delay model is created 870 through machine learning. For example, a real system is set up first and then response times are monitored and a statistical analysis is made for typical answering behavior. This profile can then be provided to bootstrap multiple honeypot concealment systems. For example, a repository of delay profiles can be constructed.

In order to mimic a cross-stack latency profile of an ordinary Internet device by a honeypot, in an example embodiment there is performed multidimensional probability density function modelling, using the latency profiles at the various levels of the considered stack, and this created probability density function is used as the delay model.

It is observed that the latency on one layer of the stack may influence or be influenced by the latencies across other stack levels. In a simplistic example, a software running slow (top of the stack) will delay the sending of the traffic, and thus cause further delays across the subsequent layers of the stack, all the way down to (or just before) the hardware layers. Thus, latency values across the stack are not independent. In an example embodiment, latency values across the stack are not be considered as independent in order to mimic real Internet devices more realistic than otherwise.

In an example embodiment, self-learning of the delay model (e.g., by the delay mechanism management 160) initially takes the latencies for each stack level, and considers each stack latency profile as a random variable (with all of them being potentially dependent on each other). The delay mechanism management 160 then models the joint probability density function of the joint random variables.

In an example embodiment, the delay model is then used similarly to drawing a value out of the probability density function. In an example embodiment, a plurality of latency values is drawn at once, in a manner that respects a stack of expected joint latency profiles, for more realistic overall latency values.

The learning of the model is done in an example embodiment in different ways depending on the height of the stack (number of layers in it), and thus the number of random variables (for latency profiles) to be taken into account. For example, if the number of stack layers is low (e.g., between 1 and 3), then traditional techniques such as Kernel Density Estimation can be used to create a reasonable probability density function out of the latency data from all the stack levels, assuming the latencies are not distributed in very unusual manner (i.e. in a way that they cannot be easily modelled by linear combinations of regular kernels). This should cover most of the cases. On the other hand, if the number of layers is higher (e.g., from 3 to 4 to up to large numbers), then Kernel Density Estimation may fail as an estimation technique (due to the complexity of the task and the fact that such estimations using Kernel Density Estimation requires a large amount of data). In such a case, according to an example embodiment, a fallback on empirical based estimation is used. In an example embodiment, the joint probability density function is extrapolated from the latency values using the histogram of the data, normalization and machine learning to learn the shape of the normalized histogram.

In an example embodiment, the method further comprises sending 880 to the probe, responsive to each of the one or more subsequent request message, the corresponding subsequent application layer response message and one or more lower layer continuation messages with the determined distribution of latencies for countering honeypot detection.

In an example embodiment, the method further comprises receiving 890 from the probe a plurality of different application layer requests and associated lower layer requests. In an example embodiment, the different application layer requests are responded 895 with application layer responses and further lower layer continuation messages adapted to mimic corresponding latency profiles of an Internet device that is not a honeypot.

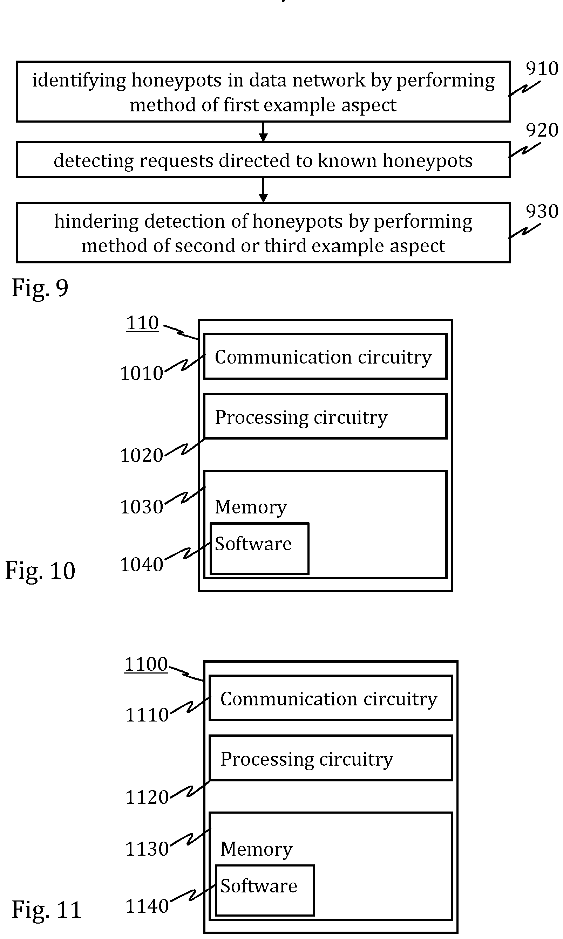

Fig. 9 shows a flow chart of a yet another defense process according to an example embodiment, comprising:
identifying 910 honeypots in a data network by performing the method of the first example aspect;
detecting 920 requests directed to known honeypots; and
hindering 930 detection of the honeypots by performing the method of the second or third example aspect.

In an example embodiment, the requests and their responses are intercepted by a protective network element. In an example embodiment, the protective network element performs the second or third example embodiment independently of the first Internet device. Alternatively, the second example aspect is performed by the first Internet device.

Fig. 10 shows a block diagram of a probe 110 of an example embodiment, comprising:
a communication circuitry 1010 configured to send to a first Internet device 120 an application layer request message and a lower layer request message associated with the application layer request message, and to responsively receive from the first Internet device 120 an application layer response message and one or more lower layer continuation messages; and
a processing circuitry 1020 configured to:
determine latencies of the application layer response message and of the one or more lower layer continuation messages; and
compare the determined latencies with respective reference values to identify a likely honeypot.

In an example embodiment, the probe 110 further comprises a memory 1030. In an example embodiment, the memory comprises software 1040 (e.g., computer program) comprising computer executable program code. In an example embodiment, the processing circuitry 1020 comprises at least one processor for executing the program code and controlling the operation of the probe 110 according to the program code.

Fig. 11 shows a block diagram of a defense apparatus 1100 of an example embodiment, such as the delay mechanism 150. The defense apparatus 1100 comprising:
a communication circuitry 1110 configured to receive network traffic originating from the probe 110 for the honeypot 120;
a processing circuitry 1120 configured to:
adjust network traffic of the honeypot 120 directed to the probe 110 by delaying the network traffic to mimic a cross-stack response latency distribution of a network stack of an Internet device simulated by the honeypot; and
send the adjusted network traffic originating from the honeypot 120 to the probe 110.

In an example embodiment, the probe 110 further comprises a memory 1130. In an example embodiment, the memory 1130 comprises software 1140 (e.g., computer program) comprising computer executable program code. In an example embodiment, the processing circuitry 1120 comprises at least one processor for executing the program code and controlling the operation of the probe 110 according to the program code.

In another example embodiment, the communication circuitry 1110 and a processing circuitry 1120 are together configured to enable the defense apparatus 1100 to:
receive from the probe 110, addressed to the first Internet device 120, an application layer request message and a lower layer request message associated with the application layer request message, and responsively obtain from the first Internet device 120 an application layer response message and corresponding one or more lower layer continuation messages;
using corresponding reference values, determine latencies of the application layer response message and of the corresponding one or more lower layer continuation messages; and
send to the probe 110 the application layer response message and the one or more lower layer continuation messages with the determined latencies for countering honeypot detection.

Any of the communication circuitries 1010, 1110 comprises, for example, a local area network (LAN) port; a wireless local area network (WLAN) unit; a cellular data communication unit; and/or a satellite data communication unit.

Any of the processing circuitries 1020, 1120 comprises, for example, any one or more of: a master control unit (MCU); a microprocessor; a digital signal processor (DSP); an application specific integrated circuit (ASIC); a field programmable gate array; and a microcontroller.

In an example embodiment, honeypots are detected by identifying particular cross-stack response latency distribution of a network stack of an Internet device. In an example embodiment, the honeypot detection is correspondingly hindered by modifying the cross-stack response latency distribution of the network stack of an Internet device by a network element that is either a separate device or the honeypot itself.

As used in this application, the term "circuitry" may refer to one or more or all of the following:
(a) hardware-only circuit implementations (such as implementations in only analog and/or digital circuitry) and;
(b) combinations of hardware circuits and software, such as (as applicable):
   (i) a combination of analog and/or digital hardware circuit(s) with software/firmware; and
   (ii) any portions of hardware processor(s) with software (including digital signal processor(s)), software, and memory(ies) that work together to cause an apparatus, such as a mobile phone or server, to perform various functions); and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Without in any way limiting the scope, interpretation, or application of the claims appearing below, a technical effect of one or more of the example embodiments disclosed herein is that honeypots may be detected based on their latency profiles. Another technical effect of one or more of the example embodiments disclosed herein is that honeypots may be concealed from malicious detection by adjusting the latency profile of messages sent by the honeypots to mimic the latency profiles of ordinary Internet devices.

Embodiments of the present invention may be implemented in software, hardware, application logic or a combination of software, hardware and application logic. In an example embodiment, the application logic, software or an instruction set is maintained on any one of various conventional computer-readable media. In the context of this document, a "computer-readable medium" may be any non-transitory media or means that can contain, store, communicate, propagate or transport the instructions for use by or in connection with an instruction execution system, apparatus, or device, such as a computer, with one example of a computer described and depicted in Fig. 10. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the before-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the foregoing describes example embodiments of the invention, these descriptions should not be viewed in a limiting sense. Rather, there are several variations and modifications which may be made without departing from the scope of the present invention as defined in the appended claims.

## Claims

1. A method in a probe (110), comprising:
sending (610) to a first Internet device (120) an application layer request message and a lower layer request message associated with the application layer request message, and responsively receiving from the first Internet device (120) an application layer response message and one or more lower layer continuation messages;
determining (620) latencies of the application layer response message and of the one or more lower layer continuation messages; and
comparing (630) the determined latencies with respective reference values to identify a likely honeypot.

2. The method of claim 1, wherein the comparing of the latencies of the application layer response message and of the one or more lower layer continuation messages comprises additionally comparing (640) against each other at least two of the latencies of the application layer response message and the lower layer continuation messages.

3. The method of claim 1 or 2, wherein the comparing of the latencies of the application layer response message and of the one or more lower layer continuation messages comprises:
clustering (632) N-dimensional latency data obtained from the application layer response message and the lower layer continuation messages; and
selecting (634) best matches for the first Internet device (120) from pre-probed Internet devices and honeypot clusters.

4. The method of any one of preceding claims, wherein the application layer request message comprises an HTTP request.

5. The method of any one of preceding claims, the one or more lower layer continuation messages being transport control protocol messages.

6. The method of any one of preceding claims, wherein the one or more lower layer continuation messages comprise a transport layer connection tear down request message.

7. The method of any one of preceding claims, comprising:
sending N times an application layer request message and lower layer continuation messages; and
determining distributions of latencies of corresponding N application layer response messages and sets of one or more lower layer continuation messages.

8. The method of claim 7, comprising comparing the determined distributions of latencies with respective reference latency distribution values for honeypot detection.

9. A method comprising:
receiving (810) from a probe (110), addressed to a first Internet device (120), an application layer request message and a lower layer request message associated with the application layer request message, and responsively obtaining from the first Internet device (120) an application layer response message and corresponding one or more lower layer continuation messages;
using (820) corresponding reference values, determining latencies of the application layer response message and of the corresponding one or more lower layer continuation messages; and
sending (830) to the probe (110) the application layer response message and the one or more lower layer continuation messages with the determined latencies for countering honeypot detection.

10. The method of claim 9, further comprising receiving from the probe (110) one or more subsequent application layer and lower layer request messages addressed to the first Internet device (120).

11. The method of claim 9 or 10, further comprising:
each time a subsequent application layer and lower layer request messages are received, determining (850) a corresponding subsequent application layer response message and one or more subsequent lower layer continuation messages;
determining (860) emulated distributions of latencies for the subsequent response and continuation messages; and
sending (880) to the probe (110), responsive to each of the one or more subsequent request message, the corresponding subsequent application layer response message and one or more lower layer continuation messages with the determined distribution of latencies for countering honeypot detection.

12. A first apparatus (110), comprising:
a communication circuitry (1010) configured to send to a first Internet device (120) an application layer request message and a lower layer request message associated with the application layer request message, and to responsively receive from the first Internet device (120) an application layer response message and one or more lower layer continuation messages; and
a processing circuitry (1020) configured to perform the method of any one of claims 1 to 8.

13. A second apparatus (1100) comprising:
a communication circuitry (1110) configured to receive network traffic originating from a probe (110) for a honeypot (120); and
a processing circuitry (1120) configured to perform the method of any one of claims 9 to 11.

14. A system comprising the first apparatus (110) of claim 12 and the second apparatus (1100) of claim 13.

15. A computer program comprising computer executable program code (1040, 1140) configured to cause an apparatus (110, 1100) to perform, when executed by a processor of the apparatus (110, 1100), the method of any one of claims 1 to 11.

## Patentansprüche

1. Verfahren in einer Sonde (110), das Folgendes umfasst:
Senden (610) einer Anwendungsschichtanforderungsnachricht und einer Anforderungsnachricht einer niedrigeren Schicht, die mit der Anwendungsschichtanforderungsnachricht verknüpft ist, an eine erste Internetvorrichtung (120) und in Reaktion darauf Empfangen einer Anwendungsschichtantwortnachricht und einer oder mehrerer Fortsetzungsnachrichten einer niedrigeren Schicht von der ersten Internetvorrichtung (120);
Bestimmen (620) von Latenzen der Anwendungsschichtantwortnachricht und der einen oder der mehreren Fortsetzungsnachrichten einer niedrigeren Schicht; und
Vergleichen (630) der bestimmten Latenzen mit jeweiligen Referenzwerten, um einen wahrscheinlichen Honigtopf zu identifizieren.

2. Verfahren nach Anspruch 1, wobei das Vergleichen der Latenzen der Anwendungsschichtantwortnachricht und der einen oder der mehreren Fortsetzungsnachrichten einer niedrigeren Schicht das zusätzliche Vergleichen (640) von mindestens zwei der Latenzen der Anwendungsschichtantwortnachricht und der Fortsetzungsnachrichten einer niedrigeren Schicht miteinander umfasst.

3. Verfahren nach Anspruch 1 oder 2, wobei das Vergleichen der Latenzen der Anwendungsschichtantwortnachricht und der einen oder der mehreren Fortsetzungsnachrichten einer niedrigeren Schicht Folgendes umfasst:
Clustern (632) von N-dimensionalen Latenzdaten, die von der Anwendungsschichtantwortnachricht und den Fortsetzungsnachrichten einer niedrigeren Schicht erhalten werden; und
Auswählen (634) von besten Übereinstimmungen für die Internetvorrichtung (120) aus vorab sondierten Internetvorrichtungen und Honigtopfclustern.

4. Verfahren nach einem der vorhergehenden Ansprüche, wobei die Anwendungsschichtanforderungsnachricht eine HTTP-Anforderung umfasst.

5. Verfahren nach einem der vorhergehenden Ansprüche, wobei die eine oder die mehreren Fortsetzungsnachrichten einer niedrigeren Schicht Transportsteuerprotokollnachrichten sind.

6. Verfahren nach einem der vorhergehenden Ansprüche, wobei die eine oder die mehreren Fortsetzungsnachrichten einer niedrigeren Schicht eine Anforderungsnachricht für einen Transportschichtverbindungsabbruch umfassen.

7. Verfahren nach einem der vorhergehenden Ansprüche, das Folgendes umfasst:
N-maliges Senden einer Anwendungsschichtanforderungsnachricht und von Fortsetzungsnachrichten einer niedrigeren Schicht; und
Bestimmen von Verteilungen von Latenzen von entsprechenden N Anwendungsschichtantwortnachrichten und Sätzen von einer oder mehreren Fortsetzungsnachrichten einer niedrigeren Schicht.

8. Verfahren nach Anspruch 7, das das Vergleichen der bestimmten Verteilungen von Latenzen zur Honigtopfdetektion mit jeweiligen Latenzverteilungsreferenzwerten umfasst.

9. Verfahren, das Folgendes umfasst:
Empfangen (810) einer Anwendungsschichtanforderungsnachricht und einer Anforderungsnachricht einer niedrigeren Schicht, die mit der Anwendungsschichtanforderungsnachricht verknüpft ist, von einer Sonde (110), die an eine erste Internetvorrichtung (120) adressiert ist, und in Reaktion darauf Erhalten einer Anwendungsschichtantwortnachricht und einer oder mehrerer entsprechender Fortsetzungsnachrichten einer niedrigeren Schicht von der ersten Internetvorrichtung (120);
Bestimmen von Latenzen der Anwendungsschichtantwortnachricht und der entsprechenden einen oder mehreren Fortsetzungsnachrichten einer niedrigeren Schicht unter Verwendung (820) von entsprechenden Referenzwerten; und
Senden (830) der Anwendungsschichtantwortnachricht und der einen oder der mehreren Fortsetzungsnachrichten einer niedrigeren Schicht mit den bestimmten Latenzen an die Sonde (110), um einer Honigtopfdetektion entgegenzuwirken.

10. Verfahren nach Anspruch 9, das ferner das Empfangen von einer oder mehreren nachfolgenden Anwendungsschicht- und Anforderungsnachrichten einer niedrigeren Schicht, die an die erste Internetvorrichtung (120) adressiert sind, von der Sonde (110) umfasst.

11. Verfahren nach Anspruch 9 oder 10, das ferner Folgendes umfasst:
Bestimmen (850) einer entsprechenden nachfolgenden Anwendungsschichtantwortnachricht und einer oder mehrerer nachfolgenden Fortsetzungsnachrichten einer niedrigeren Schicht, jedes Mal wenn eine nachfolgende Anwendungsschicht- und Anforderungsnachrichten einer niedrigeren Schicht empfangen werden;
Bestimmen (860) von emulierten Verteilungen von Latenzen für die nachfolgenden Antwort- und Fortsetzungsnachrichten; und
Senden (880) der entsprechenden nachfolgenden Anwendungsschichtantwortnachricht und der einen oder der mehreren Fortsetzungsnachrichten einer niedrigeren Schicht mit der bestimmten Verteilung von Latenzen, um einer Honigtopfdetektion entgegenzuwirken, in Reaktion auf jede der einen oder der mehreren nachfolgenden Anforderungsnachrichten an die Sonde (110).

12. Erste Einrichtung (110), die Folgendes umfasst:
eine Kommunikationsschaltung (1010), die dazu ausgelegt ist, eine Anwendungsschichtanforderungsnachricht und eine Anforderungsnachricht einer niedrigeren Schicht, die mit der Anwendungsschichtanforderungsnachricht verknüpft ist, an eine erste Internetvorrichtung (120) zu senden und in Reaktion darauf eine Anwendungsschichtantwortnachricht und eine oder mehrere Fortsetzungsnachrichten einer niedrigeren Schicht von der ersten Internetvorrichtung (120) zu empfangen; und
eine Verarbeitungsschaltung (1020), die dazu ausgelegt ist, das Verfahren nach einem der Ansprüche 1 bis 8 durchzuführen.

13. Zweite Einrichtung (1100), die Folgendes umfasst:
eine Kommunikationsschaltung (1110), die dazu ausgelegt ist, Netzwerkverkehr, der von einer Sonde (110) für einen Honigtopf (120) kommt, zu empfangen; und
eine Verarbeitungsschaltung (1120), die dazu ausgelegt ist, das Verfahren nach einem der Ansprüche 9 bis 11 durchzuführen.

14. System, das die erste Einrichtung (110) nach Anspruch 12 und die zweite Vorrichtung (1100) nach Anspruch 13 umfasst.

15. Computerprogramm, das einen computerausführbaren Programmcode (1040, 1140) umfasst, der, wenn er von einem Prozessor einer Einrichtung (110, 1100) ausgeführt wird, dazu ausgelegt ist zu bewirken, dass die Einrichtung (110, 1100) das Verfahren nach einem der Ansprüche 1 bis 11 ausführt.

## Revendications

1. Procédé dans une sonde (110), comprenant :
l'envoi (610) à un premier dispositif Internet (120) d'un message de demande de couche application et d'un message de demande de couche inférieure associé au message de demande de couche application, et la réception en réponse en provenance du premier dispositif Internet (120) d'un message de réponse de couche application et d'un ou plusieurs messages de continuation de couche inférieure ;
la détermination (620) de latences du message de réponse de couche application et des un ou plusieurs messages de continuation de couche inférieure ; et
la comparaison (630) des latences déterminées avec des valeurs de référence respectives pour identifier un pot de miel probable.

2. Procédé selon la revendication 1, dans lequel la comparaison des latences du message de réponse de couche application et des un ou plusieurs messages de continuation de couche inférieure comprend additionnellement la comparaison (640) mutuelle d'au moins deux des latences du message de réponse de couche application et des messages de continuation de couche inférieure.

3. Procédé selon la revendication 1 ou 2, dans lequel la comparaison des latences du message de réponse de couche application et des un ou plusieurs messages de continuation de couche inférieure comprend :
le regroupement (632) de données de latence à N dimensions obtenues à partir du message de réponse de couche application et des messages de continuation de couche inférieure ; et
la sélection (634) des meilleures correspondances pour le premier dispositif Internet (120) à partir de dispositifs Internet pré-sondés et de grappes de pots de miel.

4. Procédé selon l'une quelconque des revendications précédentes, dans lequel le message de demande de couche application comprend une requête HTTP.

5. Procédé selon l'une quelconque des revendications précédentes, les un ou plusieurs messages de continuation de couche inférieure étant des messages de protocole de contrôle de transport.

6. Procédé selon l'une quelconque des revendications précédentes, dans lequel les un ou plusieurs messages de continuation de couche inférieure comprennent un message de demande de libération de connexion de couche transport.

7. Procédé selon l'une quelconque des revendications précédentes, comprenant :
l'envoi N fois d'un message de demande de couche application et de messages de continuation de couche inférieure ; et
la détermination de distributions de latences de N messages de réponse de couche application correspondants et d'ensembles d'un ou plusieurs messages de continuation de couche inférieure.

8. Procédé selon la revendication 7, comprenant la comparaison des distributions de latences déterminées avec des valeurs de distribution de latence de référence respectives pour la détection de pot de miel.

9. Procédé comprenant :
la réception (810) en provenance d'une sonde (110), adressée à un premier dispositif Internet (120), d'un message de demande de couche application et d'un message de demande de couche inférieure associé au message de demande de couche application, et l'obtention en réponse à partir du premier dispositif Internet (120) d'un message de réponse de couche application et d'un ou plusieurs messages de continuation de couche inférieure correspondants ;
en utilisant (820) des valeurs de référence correspondantes, la détermination de latences du message de réponse de couche application et des un ou plusieurs messages de continuation de couche inférieure correspondants ; et
l'envoi (830) à la sonde (110) du message de réponse de couche application et des un ou plusieurs messages de continuation de couche inférieure avec les latences déterminées pour contrer la détection de pot de miel.

10. Procédé selon la revendication 9, comprenant en outre la réception en provenance de la sonde (110) d'un ou plusieurs messages de demande de couche application et de couche inférieure subséquents adressés au premier dispositif Internet (120) .

11. Procédé selon la revendication 9 ou 10, comprenant en outre :
chaque fois qu'un message de demande de couche application et de couche inférieure subséquent est reçu, la détermination (850) d'un message de réponse de couche application subséquent correspondant et d'un ou plusieurs messages de continuation de couche inférieure subséquents ;
la détermination (860) de distributions de latences émulées pour les messages de réponse et de continuation subséquents ; et
l'envoi (880) à la sonde (110), en réponse à chacun des un ou plusieurs messages de demande subséquents, du message de réponse de couche application subséquent correspondant et d'un ou plusieurs messages de continuation de couche inférieure avec la distribution de latences déterminée pour contrer la détection de pot de miel.

12. Premier appareil (110), comprenant :
un ensemble de circuits de communication (1010) configuré pour envoyer à un premier dispositif Internet (120) un message de demande de couche application et un message de demande de couche inférieure associé au message de demande de couche application, et pour recevoir en réponse en provenance du premier dispositif Internet (120) un message de réponse de couche application et un ou plusieurs messages de continuation de couche inférieure ; et
un ensemble de circuits de traitement (1020) configuré pour effectuer le procédé selon l'une quelconque des revendications 1 à 8.

13. Second appareil (1100) comprenant :
un ensemble de circuits de communication (1110) configuré pour recevoir un trafic réseau provenant d'une sonde (110) pour un pot de miel (120) ; et
un ensemble de circuits de traitement (1120) configuré pour effectuer le procédé selon l'une quelconque des revendications 9 à 11.

14. Système comprenant le premier appareil (110) selon la revendication 12 et le second appareil (1100) selon la revendication 13.

15. Programme informatique comprenant un code de programme exécutable par ordinateur (1040, 1140) configuré pour amener un appareil (100, 1100) à effectuer, lorsqu'il est exécuté par un processeur de l'appareil (110, 1100), le procédé selon l'une quelconque des revendications 1 à 11.
